# EUROPEAN PATENT SPECIFICATION

(11) **EP 4 291 451 B1**
(45) Date of publication and mention of the grant of the patent: **09.12.2026**
(21) Application number: 22752388.3
(22) Date of filing: 07.02.2022
(51) Int. Cl.: E04F 19/10, B60S 3/04, A47L 23/26

(54) **CLEANING UNIT AND CLEANING ARRANGEMENT FOR VEHICLE TIRES**
REINIGUNGSEINHEIT UND REINIGUNGSANORDNUNG FÜR FAHRZEUGREIFEN
UNITÉ DE NETTOYAGE ET AGENCEMENT DE NETTOYAGE POUR PNEUS DE VÉHICULE

(30) Priority: 09.02.2021 FI 20217030
(43) Date of publication of application: 20.12.2023
(73) Proprietor: Tyre Wash Tws Oy, 90400 Oulu (FI)
(72) Inventor: KARPPINEN, Juha, 90400 Oulu (FI)
(74) Representative: Berggren Oy
(86) International application number: PCT/FI2022/000001
(87) International publication number: WO 2022/171926

(56) References cited:
- WO-A1-2015/127963
- CN-A- 112 277 893
- JP-A- 2002 369 785
- JP-A- 2002 369 785
- US-A1- 2015 307 067
- US-A1- 2015 307 067
- US-A1- 2021 001 822
- US-B1- 7 937 793
- US-B1- 7 937 793

## Description

The invention relates to a cleaning unit for vehicle tires, the cleaning unit having a grate arrangement and a plurality of bristle rails, the bristle rails having an upper surface of the bristle rail, the bristle rails having bristles on the upper surface of the bristle rail. The invention further relates to a cleaning arrangement for vehicle tires, wherein the cleaning arrangement comprises at least one cleaning module, the cleaning module having a frame with walls and a floor and a first end and a second end of the frame, and a collection space for contaminants collected by the cleaning arrangement.

### PRIOR ART

It is known that street dust and other contaminants found in urban environments adhere to vehicle tires in particular. When stuck to the tires, these contaminants find their way into vehicle storage facilities. Similarly, transporting and handling of goods and their transfer in terminals and production depots, as well as in goods reception facilities, give rise to and spread a wide range of pollutants. Delivery truck tires contain street dust and sand as well as all sorts of other contaminants within the terminal area. Dust, sand and other contaminants are trapped in the tires of vehicles used in unloading situations, and these can then be transferred to warehouses and, in some cases, to production facilities. During storage, dust from cardboard packaging material is often generated during the handling of goods and the unpacking of cardboard boxes. This kind of dust is often difficult to control and can enter the interior of production facilities, and in the worst case, make its way all the way to the production lines.

Street dust is finely ground asphalt concrete and sand, but it also contains, for example, soot particles, material released from car tires and other parts of cars as well as soil microbes. Street dust also contains organic microbes of animal origin as well as pollen. Street dust is most problematic during dry weather in the spring, when wind and traffic lift dust that has accumulated on the streets into the breathing air. In the spring season, there is also plenty of pollen present. Street dust also includes particles from construction and renovation projects. These can be a year-round problem. Street dust is not only a problem in large cities, but high particle concentrations can also occur in small municipal centers and agglomerations.

Regular cleaning of floor surfaces is used to remove street and other types of dust from indoor parking garages and the like. However, this is expensive and quite inefficient. The parking garage must be emptied of vehicles, which is inconvenient. Improving air conditioning is also expensive and in the worst case it only spreads street dust to other areas of the building. Attempts can also be made to reduce dust problems by using sweeping machines. However, this is often inefficient and, at worst, only transfers dust from one place to another. Fine dust spreads over the entire area.

Dust can also be reduced in applications where air curtain devices are installed near doors of industrial or production plants, which blow air into the door opening when the door is opened to transfer goods. The air curtain device blows air with high power from above the door opening perpendicular to the floor. The problem here is that the air flow lifts dry dust from the floor, which can thus spread to the production facilities as well.

Food production facilities, hospitals and laboratories are buildings with a high standard of hygiene, which means that all activities must be conducted in a very clean and tidy manner.

However, what is common to all the above is that all dust, sand and other contaminants are superfluous and detrimental to the actual operations.

To reduce dust, there are devices that wash vehicle tires. In general, these are difficult to adapt for the indoors. They require a lot of space to function properly and are generally implemented in such a way that their use introduces additional problems such as noise, water spreading and significantly increased energy consumption. In addition, many of the known devices are such that it is practically impossible to place them in an existing space.

Patent publication US5341828 discloses a system for washing vehicle tires, the system having a plurality of sequentially arranged spray arrangements for spraying water and detergent onto the tires. Quite a lot of water is used here and the tires of the vehicle passing through the system spread a lot of water outside the system. The system is also quite difficult to adapt to existing spaces.

Patent publication US6561201 discloses a device for washing vehicle tires. The device has an elongated structure along which the vehicle travels, and the bottom of the structure is filled with transverse cross-sectional barrier structures with holes for spraying water. This device uses a significant amount of water and requires a powerful pump arrangement and motor to operate it. Furthermore, the water tank must be quite large. The device also wets the vehicle so that water inevitably spreads outside the device. The device is therefore practically impossible to place indoors.

Patent publication US20150307067 discloses a carpet arrangement for cleaning vehicle tires with a grate and rails with bristles on top. The rails are located under the grate so that the bristles extend through the grate. As the vehicle drives over the carpet arrangement, the bristles remove contaminants from the surface of the tires, which fall between the rails. However, the arrangement is difficult to clean, and it is possible that the bristles will only transfer the dust to the air. Patent publication WO 2015/127963 discloses also similar structure.

There is a clear need for an arrangement that would significantly reduce the entry of dust, dirt and other contaminants with vehicles into indoor spaces such as car parks, warehouses and distribution centers. In addition, there is a need for an arrangement that can be placed in an existing indoor location and that is easy to clean.

### SUMMARY

The object of the invention is a solution that can significantly reduce the disadvantages and drawbacks associated with the prior art. In particular, it is an object of the invention to provide a solution that is suitable for cleaning vehicle tires indoors.

The objects according to the invention are achieved by a cleaning unit and a cleaning arrangement that are characterized by what is stated in the independent claims. Some preferred embodiments of the invention are set out in the dependent claims.

The inventor has found that most of the dust and dirt in car parks, warehouses, terminals and similar spaces or buildings has entered the spaces in the tires of vehicles, and in particular on the surfaces of the tires that come in contact with the road. Thus, cleaning the tires and collecting the dust and the other dirt that has becomes detached during cleaning substantially reduces the dirtiness of the building. This reduces the need for cleaning and improves the air quality in the entire building. At the same time, the dirtiness of vehicles and other nuisances caused by dust are reduced.

The invention is a cleaning arrangement for cleaning vehicle tires, wherein the cleaning arrangement comprises at least one cleaning module. The cleaning module has a frame with walls, a floor and a collection space for contaminants and one or more cleaning units above the collection space. The cleaning unit has a grate arrangement and a plurality of bristle rails and intermediate rails which are transverse to the direction of travel of the vehicle. At least a portion of the rails are attached to the grate arrangement by flexible arrangements that flex when the vehicle passes over the rails, causing the rails to tilt and vibrate the tire, enhancing the release of contaminants from the tires.

When reference is made in the text to the upper or lower side or similar directions, a situation is described in which the arrangements according to the invention are in their normal operating position.

A cleaning unit for vehicle tires according to an embodiment of the invention has a grate arrangement and a plurality of bristle rails, the bristle rails having a top surface of the bristle rail, and the bristle rails having bristles on the top surface of the bristle rail. According to a preferred embodiment of the invention, the bristle rails are above the grate arrangement transverse to the direction of travel of the vehicle over cleaning unit. The cleaning unit also comprises intermediate rails and flexible arrangements. The intermediate rails have an upper surface of the intermediate rails, and the intermediate rails are above the grate arrangement and at least a portion of the intermediate rails are between the bristle rails so that there is a gap between at least a portion of the bristle rails and the intermediate rails. The bristle rails are attached to the grate arrangement with flexible arrangements. The upper surface of the intermediate rails is between the upper surfaces of the bristle rails and the planes formed by the outer ends of the bristles. The different rail types and the vibration of the flexibly attached rails cause vibrations in the tires of the vehicles, which helps in the cleaning of the tires by the bristles. In addition, the intermediate rails reduce the forces exerted on the bristles by the vehicle tires, reducing the wear and tear on the bristles.

In one embodiment of the cleaning unit according to the invention, the intermediate rails are attached to the grate arrangement with flexible arrangements. This feature gives more direction to the vibration of the rails.

In a second embodiment of the cleaning unit according to the invention, the bristle rails have a lower surface of the bristle rails, and the intermediate rails have a lower surface of the intermediate rails, and the flexible arrangements below the bristle rails cover the lower surfaces of the bristle rails, and the flexible arrangements below the intermediate rails cover the lower surfaces of the intermediate rails. This feature enhances the movement of the rails and supports the rails.

In a third embodiment of the cleaning unit according to the invention, the flexible arrangements have such elastic properties that as the vehicle passes over the cleaning unit, the bristle rails and the intermediate rails tilt as the tire of the vehicle crosses the rail. This feature reduces the accumulation of dust and dirt on the top surfaces of the rails by dropping them into the gaps in the cleaning unit.

In a fourth embodiment of the cleaning unit according to the invention, the elastic properties of the flexible arrangements associated with the bristle rails and the flexible arrangements associated with the intermediate rails are different. In a fifth embodiment of the cleaning unit according to the invention, the flexible arrangements associated with the bristle rails are more elastic than the flexible arrangements associated with the intermediate rails. This feature allows the rails to be tilted and the vibration they cause to be optimized. By reducing the inclination of the intermediate rails, the bristles are protected.

In a cleaning arrangement for vehicle tires according to an embodiment of the invention, the cleaning arrangement comprises at least one cleaning module having a frame having walls and a floor and a first end and a second end of the frame and a collection space for contaminants collected by the cleaning arrangement. According to a preferred embodiment of the invention, above the collection space there is a cleaning unit, or several cleaning units as described above, and the cleaning module is configured so that the direction of travel of the vehicle over the cleaning arrangement is parallel to the direction between the ends of the frame.

In one embodiment of the cleaning arrangement according to the invention, the collection space has a first side chamber and a second side chamber, said side chambers being on opposite walls of the frame and covering at least a part of the wall. In a second embodiment of the cleaning arrangement according to the invention, the first side chamber and the second side chamber support the grate arrangement of the cleaning unit.

In a third embodiment of the cleaning arrangement according to the invention, the frame has a blowing connection and a suction connection, the connections being connected to the collection space so that the blowing connection is connected to the first side chamber and the suction connection is connected to the second side chamber, and the first side chamber and the second side chamber have side chamber openings to the collection space. The blowing connection and the suction connection make it possible to clean the collection space with vacuum cleaners or the like. The openings concentrate the blowing and sucking action and thus increase the efficiency of cleaning the collection space.

In a fourth embodiment of the cleaning arrangement according to the invention, the openings of the side chambers are at the level of the floor of the frame, i.e. the floor forms part of the sides of the opening. Placing the openings at floor level controls the blowing and sucking action.

In a fifth embodiment of the cleaning arrangement according to the invention, the cleaning module has a water connection and an arrangement for conveying water to the surface of the tire of the vehicle crossing the cleaning module. The use of water binds fine dust and removes it from the surface of the tires.

In a sixth embodiment of the cleaning arrangement according to the invention, the cleaning module has a sensor arrangement for detecting the vehicle and initiating the conveyance of water to the surface of the vehicle tire.

In a seventh embodiment of the cleaning arrangement according to the invention, the cleaning arrangement comprises two or more cleaning modules, and the cleaning modules are configured to be placed side by side or in line or both to form cleaning arrangements of different sizes. This feature allows the cleaning arrangement to be scaled up to different applications and uses.

In an eighth cleaning arrangement according to the invention, the frame of the cleaning module or modules is at least partially below the surface of the floor or the like.

In a ninth embodiment of the cleaning arrangement according to the invention, the frame of the cleaning module or cleaning modules is at least partially above the surface of the floor or the like, and the ends of the cleaning arrangement have ramp arrangements.

An advantage of the invention is that it provides an arrangement capable of substantially removing dust and other dirt from the tires of a vehicle in an indoor setting. The arrangement according to the invention can also be easily placed in existing spaces without major changes. The arrangement according to the invention can be made substantially shorter than the devices of the prior art without the result being significantly inferior. Furthermore, the invention can be applied on an industrial scale without any significant changes.

The invention is also energy efficient. The invention is also easily dimensioned for vehicles of different sizes and different vehicle volumes. With the device according to the invention, the cleaning process is fast and automatic. The driver of the vehicle does not need to take any additional measures and does not have to leave the vehicle or stop the vehicle.

The invention also has the advantage that it can be used in different types of spaces.

A further advantage of the invention is that it does not spread water and dirt in its vicinity during use. Furthermore, the arrangement according to the invention can be easily cleaned through the suction chamber by means of vacuum suction, which can be enhanced with an opposite air blow.

### DESCRIPTION OF THE DRAWINGS

The invention is described in detail below. In the description, reference is made to the accompanying drawings in which
- Fig. 1a: shows an example of an embodiment of a cleaning arrangement seen from above,
- Fig. 1b: shows a longitudinal section of the cleaning arrangement of Fig. 1a,
- Fig, 1c: shows a cross-section of the cleaning arrangement of Fig. 1a,
- Fig. 2: shows an example of a frame and grate arrangement of another embodiment of the cleaning arrangement,
- Fig. 3: shows an example of the side chambers of an embodiment of the cleaning arrangement,
- Fig. 4: shows an example of a third embodiment of the cleaning arrangement,
- Fig. 5: shows an example of a fourth embodiment of the cleaning arrangement, and
- Fig. 6: shows an example of a fifth embodiment of the cleaning arrangement.

### DETAILED EXPLANATION OF THE DRAWINGS

The embodiments in the following description are exemplary only, and a person skilled in the art may implement the basic idea of the invention in a manner other than that explained in the description. The description may in several places refer to an embodiment or embodiments, but this does not mean that the reference in question is directed to one described embodiment only or that the feature described is useful in one described embodiment only. Individual features of two or more embodiments can be combined, thus creating new embodiments of the invention.

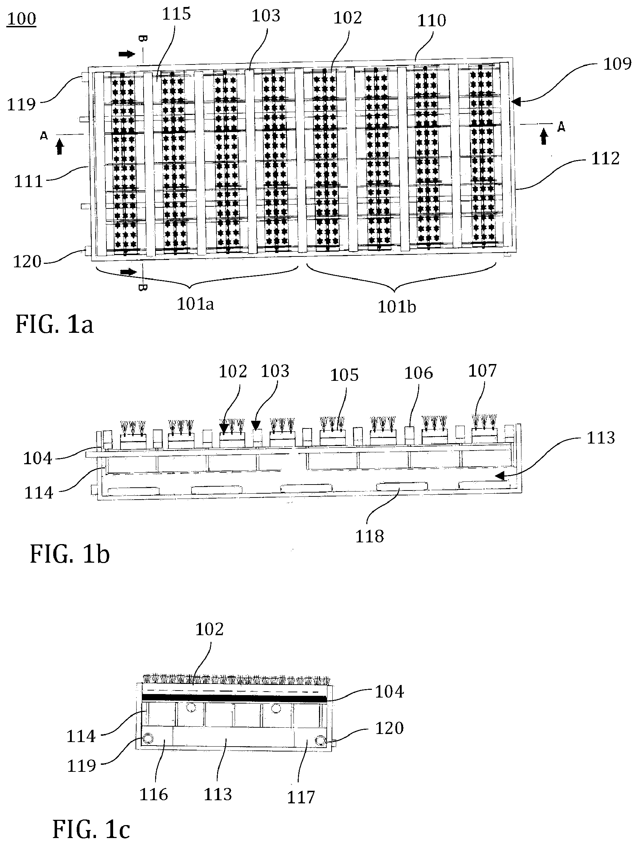

Fig. 1a shows an embodiment of a cleaning arrangement 100 for vehicle tires. The cleaning arrangement is viewed from above. Fig. 1b is a longitudinal section of the cleaning arrangement from A to A viewed from the side. Fig. 1c is a cross-section of the cleaning arrangement from B to B as viewed from the direction of the head of the cleaning arrangement. For clarity, Fig. 1a, 1b and 1c will be considered together.

The cleaning arrangement 100 is an elongated structure configured so that the vehicle to be cleaned travels over the cleaning arrangement in the longitudinal direction. There are also embodiments in which the width of the cleaning arrangement is greater than its length. In that case, the cleaning arrangement comprises one or more cleaning modules. This embodiment has one cleaning module 109.

The cleaning module 109 has a frame 110 with walls and a floor, as well as a first end 111 of the frame and a second end 112 of the frame, and a collection space 113 for contaminants collected by the cleaning arrangement. The cleaning module is configured so that the direction of travel of the vehicles to be cleaned is between the ends of the frame, i.e. the vehicles travel from the first end of the frame towards the other end of the frame and vice versa. In some embodiments, the direction over the cleaning module is optimized, i.e., the cleaning effect is better in one or the other direction. The frame is a box-like structure that is open-topped. The frame is made of metal or a similar suitable material. There are embodiments in which the frame is formed by making a frame-shaped recess in, for example, a concrete floor or a similar solid surface. The shapes of the frame define the collection space 113.

Furthermore, the cleaning module 109 has one or more cleaning units 101. In the embodiment of Fig. 1, there are two cleaning units: a first cleaning unit 101a and a second cleaning unit 101b. The cleaning units are in the cleaning module so that they are above the collection space 113 and cover the collection space. The cleaning units remove dust, dirt and similar contaminants from the tires of the vehicle passing over them and direct them to the collection space.

The cleaning unit 101 comprises a grate arrangement 114, bristle rails 102, intermediate rails 103 and flexible arrangements 104. The upper surfaces of the rails define the upper surface of the cleaning unit. In the embodiment of Figure 1, the grate arrangement is a grid formed of elongated metal plates on the edge of a vertical narrow side, i.e. the height of the plates is greater than the width. Of course, the grate arrangement can be implemented in other ways as well. The grate arrangement and the frame 110 of the cleaning module 109 are shaped so that the grate arrangement rests on the frame so that when the cleaning unit is in place, an empty space is left between the grate arrangement and the floor of the frame and the collection space 113 is in this empty space. To support the grate arrangement (and at the same time the cleaning unit), the frame may have configurations to which the parts of the grate arrangement fit. In some embodiments, additional support arrangements may be installed in the cleaning module to hold the grate arrangement in place. These additional support arrangements are such that they do not significantly affect the removal of collected dust from the collection space. In one embodiment, the additional support arrangement is a rod or rods attached to either the floor of the frame or the grate arrangement and prevents the grate arrangement from bending as the vehicle travels over it. What is essential about the grate arrangement is that it does not significantly impede the fall of contaminants through the cleaning unit into the collection space. This means that the openings in the grate arrangement are sufficiently large.

The bristle rail 102 is an elongated body having an upper surface 105 and a lower surface of the bristle rail. The upper surface of the bristle rail has bristles 107. The bristles remove material adhering to the vehicle tire, such as dust. The bristles are wire-like pieces with the upper ends above the upper surface of the cleaning unit 101. The bristles bend as the tire passes over them and return to their original position when the tire has passed them. In this embodiment, the bristles of all the bristle rails are in a substantially vertical position relative to the surface of the cleaning unit. In some embodiments, the bristles in different bristle rails are in different positions, and in some embodiments, the bristles of the same bristle rail are in different positions. The positioning, size and other properties of the bristles are selected according to the tires to be cleaned. The bristle rails are above the grate arrangement 114 transversely to the direction of travel beyond the vehicle cleaning unit 101, i.e., they extend from side wall to side wall.

There is one intermediate rail 103 between two adjacent bristle rails 102. The intermediate rail is an elongated body having an upper surface 106 and a lower surface of the intermediate rail. The intermediate rails are above the grate arrangement 114 transversely to the direction of travel beyond the vehicle cleaning unit 101, i.e., they extend from side wall to side wall. The intermediate rail and the surrounding bristle rails are positioned so that a gap 115 is left between the intermediate rail and the bristle rails, which is open to the collection space 113 so that the dust removed by the bristles can fall into the collection space through the gap. In one embodiment, the width of the gap is greater than the maximum size of the grit used in sanding roads. One common maximum grit size is 6 mm. The upper surface of the intermediate rail is higher than the upper surface 105 of the bristle rail. The distances between the intermediate rails and the bristle rails are adjusted so that the vehicle crossing the cleaning unit 101, and in particular its tires, is subjected to a vibrating or swaying motion, which enhances the release of dust and contaminants adhering to the tire. In addition, the intermediate rails are shaped and positioned relative to the bristle rails so that the full weight of the vehicle tire does not press against the bristles. In the example shown in Fig. 1, the width of the intermediary rails is less than the width of the bristle rails. By varying the ratio of the rail widths, the vibration caused by the rails can be optimized for different vehicles. The material of the rails may be, for example, plastic or composite material or the like.

The flexible arrangements 104 secure the bristle rails 102 and the intermediate rails 103 to the grate arrangement 114. The flexible arrangement is more elastic in its properties than the rail that fixes it to the grate arrangement, i.e., the rails are made of a more rigid material than the flexible arrangement. When the vehicle crosses the rail, the flexible arrangement changes shape due to the weight of the tire and its rotational movement, whereby the rail tilts in the direction of travel of the vehicle and regains its original shape when the tire crosses the rail. This movement enhances the vibration of the tire by adding new directions of movement. This also avoids excessive vibration of the vehicle, which can be annoying to the driver and in some cases harmful to the goods being transported. In addition, as the rail tilts more, the contaminants left on the top surface of the rail flow into the slot 115. This enhances the collection of dust and other contaminants. In some embodiments, the flexible arrangement is made of rubber or a rubber-like material. In some embodiments, the flexible arrangement below the bristle rail covers the lower surface of the bristle rail and the flexible arrangement below the intermediate rail covers the lower surface of the intermediate rail. This keeps the rails running smoothly and also equalizes the strain on the rails. In some embodiments, the elastic properties of the flexible arrangements associated with the bristle rails and the flexible arrangements associated with the intermediate rails are different, and the flexible arrangements associated with the bristle rails are more elastic than the flexible arrangements associated with the intermediary rails. This enhances the tilting of the bristle rails.

In the example shown in Fig. 1, the cleaning unit 101 has four bristle rails 102 and four intermediate rails 103. The cleaning module 109 has a first cleaning unit 101a and the second cleaning unit 101b is arranged in line so that the rails of the cleaning units are transverse to the direction of travel of the cleaning module and at the same time also with respect to the cleaning arrangement 100. The direction of travel here means the direction in which the vehicle crosses the cleaning arrangement. The cleaning units are detachable so that the collection space 113 can be inspected or cleaned. The detachability of the cleaning unit means that, for example, a damaged cleaning unit can be replaced, which substantially facilitates the maintenance of the cleaning arrangement 100. Similarly, different types of cleaning units can be replaced with a stationary cleaning system if, for example, the tires of the vehicles to be cleaned change, for example when switching to winter tires.

The collection space 113 has a first side chamber 116 and a second side chamber 117, said side chambers being on opposite walls of the frame and covering at least a part of the wall. The side chambers are hollow structures which, in this embodiment, extend from the first end 111 to the second end 112 of the frame, and the floor of the collection space and the frame 110 is between the side chambers. In the embodiment of Fig. 1, the side chambers are formed by bending a metal plate at a right angle and placing said plate against the side wall so that the wall, floor and plate of the frame form the walls of the side chamber, and the side chamber is permanently attached to the frame, for example, by welding. Of course, there are other ways to form a side chamber. Here, the side chambers are shaped so that their upper surface is flat and at a suitable height to support the grate arrangement 114 of the cleaning unit 101. In some embodiments, the upper surfaces of the side chambers and the frame side walls above the upper surfaces of the side chambers are sufficient to hold the cleaning unit in place. The walls of the side chambers on the side of the collection space have openings 118 in the side chambers. In the embodiment according to the figure, the width of the openings is greater than their height.

The cleaning module 109 has a blowing connection 119 and a suction connection 120. Said connections are configured to be connected to an arrangement or arrangements which, in order to empty the collection space of the accumulated material, provide air flow or vacuum to the collection space. These arrangements can be implemented, for example, with compressed air, an industrial vacuum cleaner or some other separate device or system. The arrangement may be fixed or movable. The arrangement may be turned on, for example, by a timer or photocell, after the vehicle has passed the cleaning arrangement 100, or manually. In the embodiment shown, the connections are at the first end 111 of the frame 110. Of course, they may be positioned in other ways. The blowing connection is connected to the first side chamber 116 so that air can be blown into the interior of the first side chamber. The suction connection is connected to the second side chamber 117 so that air can be sucked in from the interior of the second side chamber, whereby underpressure is created inside the second side chamber compared to the pressure in the collection space 113. Air jets are discharged from the openings 118 of the first side chamber into the collection space, and air is sucked from the collection space into the second side chamber through the openings in the second side chamber. The air jets in the collection chamber transfer the dust and other material in the collection space to the interior of the second side chamber, from where they leave through the suction connection for processing elsewhere. In some embodiments, there may be shapes within the side chambers that enhance flows in the collection chamber. In some embodiments, the functionalities of the blowing connection and the suction connection are interchangeable, i.e., the blowing connection becomes a suction connection and vice versa. This can be done by changing the location of the joints of the external arrangements. There are embodiments in which the currents caused by the blowing connection and the suction connection can also be realized at least in part with water. This is useful if water is used in the cleaning arrangement 100 for cleaning.

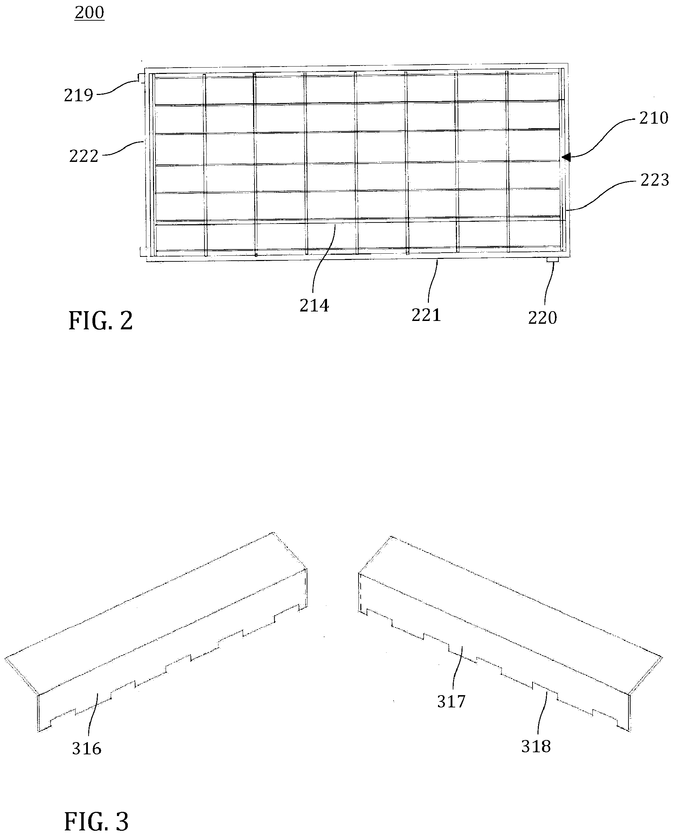

Fig. 2 shows an example of a frame 210 and a grate arrangement 214 of another embodiment of the cleaning arrangement 200 as viewed from above. Parts of the cleaning arrangement have been omitted for clarity.

The frame 210 is a box-like structure with an open top surface. The frame has a first end wall 222 of the frame, a second end wall 223 of the frame, and side walls 221 of the frame between the ends of the frame. One or more cleaning units are put in place to cover the top surface of the frame. The cleaning unit has a grate arrangement 214 and a plurality of rails on top of the grate arrangement to remove contaminants from the vehicle tires. The upper surface of the cleaning unit is substantially flush with the upper edges of the frame. The grate arrangement relies on the frame or other support arrangements so that there is a collection space under the grate arrangement.

The frame 210 has a blowing connection 219 and a suction connection 220. Inside the frame there is a side chamber with openings against each side wall 221. The blowing connection and the suction connection are each connected to their own side chamber. In this embodiment, the blowing connection is in the first end wall 222 of the frame and the suction connection is in the side wall of the frame, in the vicinity of the second end wall 223 of the frame. The joints are thus in the vicinity of opposite corners of the frame at different ends of the frame. With this arrangement, the flow inside the collection space can be smoothened. The openings in the side chamber in the vicinity of the blowing connection, i.e. near the first end wall of the frame, experience a stronger flow than the openings near the second end wall of the frame. Correspondingly, the suction flow of the openings in the side chamber on the opposite side wall is greater in the vicinity of the second end wall of the frame than in the vicinity of the first end wall of the frame. In this way, the flows in the collection space are equalized and the cleaning effect of the flows is approximately equal over the entire area of the collection space. In some embodiments, optimizing the locations of the blowing connection and the suction connection can provide a more efficient contaminant transfer effect to one area of the collection space than to other areas.

Fig. 3 shows an example of a first side chamber 316 and a second side chamber 317 of an embodiment of a cleaning arrangement. The side chambers are formed by bending an elongate metal plate in the direction of the longitudinal axis at a right angle. In this embodiment, the bending point is selected so that the width of the upper surface of the side chamber and the height of the side surface are equal. Of course, this may vary in different embodiments. At the edge of the side surface of the side chamber, i.e. the edge facing the floor of the frame, there are rectangular notches which form the openings 318 in the side chambers when the plate is placed inside the frame. **In** some embodiments, the upper surfaces of the side chambers act as support surfaces for the cleaning units.

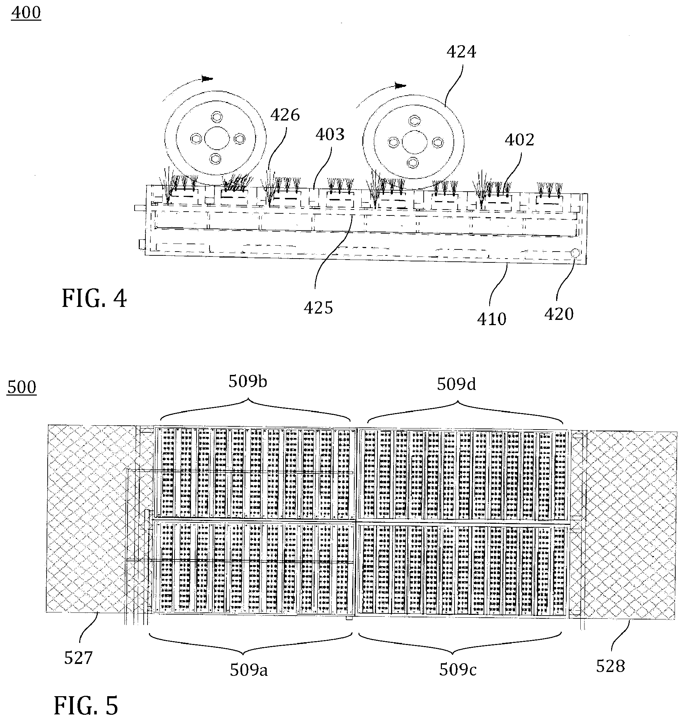

Fig. 4 is a side view of an example of a third embodiment of the cleaning arrangement 400. The cleaning arrangement includes at least one cleaning module having a frame 410, a cleaning unit, a suction connection 420, and an arrangement for conveying water 425 to the vehicle tires 424. Water is used to wash the tires and bind dust. The cleaning unit has bristle rails 402 and intermediate rails 403. The cleaning arrangement has a water connection to which an external water source is connected. The water connection is connected to an arrangement for conveying water. The water transport arrangement has nozzles that spray water jets 426 in the vicinity of the tire. The nozzles can be actuated by a sensor arrangement that detects the vehicle. In some embodiments, the bristles on the bristle rails are wetted, which in turn wet the tires. The water used for cleaning accumulates at the bottom of the frame in the collection space. Water is removed from there by a pump or vacuum arrangement through a suction connection. In some embodiments, the amount of water is monitored with a sensor arrangement and dewatering is performed when the water level exceeds a certain threshold. In some embodiments, the water surface level is kept constant and at such a height that when the vehicle crosses the cleaning arrangement, the movement of the rails and bristles transfers water to the tires. In this case, nozzles may not be required. In some embodiments, when water is used, no blowing connection is required in the cleaning module. In some embodiments where water is not allowed to accumulate at the bottom of the frame, the blowing connection can enhance the transfer of the water to be removed to the suction connection by providing an air flow to the collection space. At the same time, the collection space can be dried. There are also embodiments in which an air blowing arrangement is provided in the cleaning module. This is used to dry wet tires.

Fig. 5 shows an example of a fifth embodiment of the cleaning arrangement 500. The cleaning arrangement comprises four cleaning modules: a first cleaning module 509a, a second cleaning module 509b, a third cleaning module 509c, and a fourth cleaning module 509d. The cleaning arrangement further includes a first ramp 527 and a second ramp 528. The cleaning arrangement has a first end and a second end. The first ramp is at the first end of the cleaning arrangement and the second ramp is at the second end of the cleaning arrangement. The ramps are used when the frame of the cleaning modules is completely or partially above the floor surface. The cleaning modules have one or more cleaning units. The cleaning modules are interconnected so that the cleaning units form a uniform cleaning surface, and the vehicles to be cleaned pass over the cleaning surface in the direction between the ends of the cleaning arrangement. The first cleaning module and the second cleaning module are connected in parallel, i.e. together they form the first end of the cleaning arrangement. Likewise, the third cleaning module and the fourth cleaning module are connected in parallel, i.e. together they form the other end of the cleaning arrangement. In the embodiment shown, the first cleaning module and the second cleaning module have an arrangement for conveying water to the surface of the vehicle tires, and the third cleaning module and the fourth cleaning module have an air blowing arrangement for drying the tires. By combining cleaning modules, different cleaning arrangements can be formed that can be optimized for different applications.

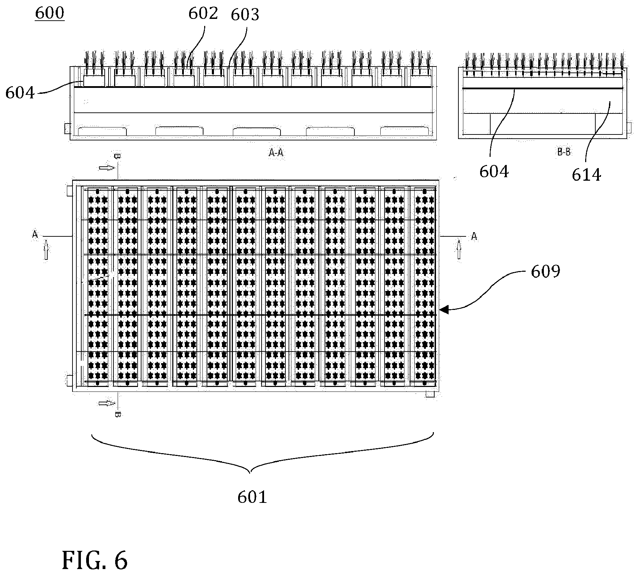

Fig. 6 shows an example of a sixth embodiment of the cleaning arrangement 600. The cleaning arrangement is shown from three directions similar to Fig. 1. The cleaning arrangement comprises one cleaning module 609 having one cleaning unit 601. The cleaning unit comprises a grate arrangement 614, bristle rails 602, intermediate rails 603 and flexible arrangements 604. The embodiment of Fig. 6 differs from the technical implementation of the embodiment of Fig. 1 in that the intermediate rails are narrower than those in the embodiment of Fig. 1 and they are attached directly to the grate arrangement, so that there are no flexible arrangements between the intermediate rails and the grate arrangement. This feature reinforces the vertical movement of the vehicle as it passes over the cleaning arrangement. Of course, the intermediate rails may be of a different size than shown in this embodiment.

Some preferred embodiments of the invention have been described above. The invention is not limited to the solutions just described, but the inventive idea can be applied in numerous ways within the scope of the claims.

## Claims

1. A cleaning unit (101a, 101b; 601) for cleaning vehicle tires (424), the cleaning unit comprising a grate arrangement (114; 214; 614) and a plurality of bristle rails (102; 402; 602), the bristle rails being elongated bodies, and the bristle rails having a bristle rail top surface (105), the bristle rails having bristles (107) on the bristle rail top surface, **characterized in that** the bristle rails are above the grate arrangement transverse to the vehicle cleaning unit and the cleaning unit further comprises intermediate rails (103; 403; 604) and flexible arrangements (104; 604), and the intermediate rails have an upper surface (106) of the intermediate rails and the intermediate rails are elongated bodies above the grate arrangement and at least a portion of the intermediate rails are between the bristle rails so that there is a gap (115) between at least a portion of the bristle rails and the intermediate rails, and the bristle rails are attached to the grate arrangement with the flexible arrangements, and the flexible arrangement is more elastic in its properties than the rail which it attaches to the grate arrangement, and the upper surface of the intermediate rails is between the upper surfaces of the bristle rails and the planes formed by the outer ends of the bristles.

2. A cleaning unit (101a, 101b; 601) according to Claim 1, **characterized in that** the intermediate rails (103; 403; 603) are fastened to the grate arrangement (114; 214; 614) by means of flexible arrangements (104; 604).

3. A cleaning unit (101a, 101b; 601) according to Claim 2, **characterized in that** the bristle rails (102; 402; 602) have a lower surface of the bristle rail and the intermediate rails (103; 403; 603) have a lower surface of the intermediate rails, and the flexible arrangements (104; 604) below the bristle rails cover the lower surfaces of the bristle rails and the flexible arrangements below the intermediate rails cover the lower surfaces of the intermediate rails.

4. A cleaning unit (101a, 101b; 601) according to one of Claims 2 to 3, **characterized in that** the flexible arrangements (104; 604) have such elastic properties that when the vehicle travels across the cleaning unit the bristle rails (102; 402; 602) and the intermediate rails (103; 403; 603) tilt as the vehicle tire crosses the rail.

5. A cleaning unit (101a, 101b; 601) according to one of Claims 2 to 4, **characterized in that** the elastic properties of the flexible arrangements associated with the bristle rails (102; 402; 602) and the flexible arrangements associated with the intermediate rails (103; 403; 603) are different.

6. A cleaning unit (101a, 101b; 601) according to Claim 5, **characterized in that** the flexible arrangements (104; 604) associated with the bristle rails (102; 402; 602) are more elastic than the flexible arrangements associated with the intermediate rails (103; 403; 603).

7. A cleaning arrangement (100; 200; 400; 500; 600) for vehicle tires, the cleaning arrangement comprising at least one cleaning module (109; 509a, 509b, 509c, 509d; 609), the cleaning module comprising a frame (110; 210; 410) having walls and a floor and a first end (111) of the frame and a second end (112) of the frame, and a collection space (113) for contaminants collected by the cleaning arrangement, and one or more cleaning units (101a, 101b; 601) above the collection space, and the cleaning unit has a grate arrangement (114; 214; 614) and a plurality of bristle rails (102; 402; 602) having bristle rail top surfaces (105), the bristle rails having bristles (107) on the top surface of the bristle rail, **characterized in that** the one or more cleaning units are cleaning units according to claim 1, in which the bristle rails are elongated bodies above the grate arrangement transverse to the direction of travel of the vehicle over cleaning unit, and the cleaning unit further comprises intermediate rails (103; 403; 603) and flexible arrangements (104; 604), and the intermediate rails have an upper surface (106) of the intermediate rail and the intermediate rails are elongated bodies above the grate arrangement and at least a portion of the intermediate rails are between the bristle rails so that there is a gap (115) between at least a portion of the bristle rails and the intermediate rails, and the bristle rails are attached to the grate arrangement by the flexible arrangements, and the flexible arrangement has more elastic properties than the rail that it attaches to the grate arrangement and the upper surface of the intermediate rails is between the upper surfaces of the bristle rails and the planes formed by the outer end of the bristles, and the cleaning module is configured so that the direction of travel of the vehicle over the cleaning arrangement is parallel to the direction between the ends of the frame.

8. A cleaning arrangement (100; 200; 400; 500; 600) according to Claim 7, **characterized in that** the collection space (113) has a first side chamber (116; 316) and a second side chamber (117; 317), said side chambers being on opposite walls of the frame (110; 210; 410) and cover at least part of the wall.

9. A cleaning arrangement (100; 200; 400; 500; 600) according to Claim 8, **characterized in that** the first side chamber (116; 316) and the second side chamber (117; 317) support the grate arrangement (114; 214; 614) of the cleaning unit.

10. A cleaning arrangement (100; 200; 400; 500; 600) according to one of Claims 8 to 9, **characterized in that** the frame (110; 210; 410) has a blowing connection (119) and a suction connection (120; 420), which connections are connected to a collection space (113) in such a way that the blowing connection connects to the first side chamber (116; 316) and the suction connection connects to the second side chamber (117; 317), and the first side chamber and the second side chamber have openings (118; 318) to the collection space.

11. A cleaning arrangement (100; 200; 400; 500; 600) according to Claim 10, **characterized in that** the openings (118; 318) of the side chambers are at floor level of the frame (110; 210; 410), i.e. the floor forms part of the sides of the opening.

12. A cleaning arrangement (100; 200; 400; 500; 600) according to one of Claims 7 to 11, **characterized in that** the cleaning module (109; 509a, 509b, 509c, 509d; 609) has a water connection and an arrangement for conveying (425) water across the cleaning module. onto the surface of the vehicle tire (424).

13. A cleaning arrangement (100; 200; 400; 500; 600) according to Claim 12, **characterized in that** the cleaning module (109; 509a, 509b, 509c, 509d; 609) has a sensor arrangement for detecting the vehicle and initiating the conveyance of water to the surface of the vehicle tire.

14. A cleaning arrangement (100; 200; 400; 500; 600) according to one of Claims 7 to 13, **characterized in that** the cleaning arrangement comprises two or more cleaning modules (109; 509a, 509b, 509c, 509d; 609), and the cleaning modules are configured to be inserted side by side or in line, or both, to form cleaning arrangements of different sizes.

15. A cleaning arrangement (100; 200; 400; 500; 600) according to one of Claims 7 to 14, **characterized in that** the frame (110; 210; 410) of the cleaning module (109; 509a, 509b, 509c, 509d; 609) or the cleaning modules is at least partially above the floor surface or the like, and there are ramp arrangements (527, 528) at the ends of the cleaning arrangement.

## Patentansprüche

1. Reinigungseinheit (101a, 101b; 601) zum Reinigen von Fahrzeugreifen (424), wobei die Reinigungseinheit eine Rostanordnung (114; 214; 614) und eine Vielzahl von Borstenschienen (102; 402; 602) umfasst, wobei die Borstenschienen längliche Körper sind und die Borstenschienen eine Borstenschienenoberseite (105) aufweisen, wobei die Borstenschienen Borsten (107) auf der Borstenschienenoberseite aufweisen, **dadurch gekennzeichnet, dass** die Borstenschienen oberhalb der Rostanordnung quer zu der Fahrzeugreinigungseinheit angeordnet sind und die Reinigungseinheit ferner Zwischenschienen (103; 403; 604) und flexible Anordnungen (104; 604) umfasst, und die Zwischenschienen eine Oberseite (106) der Zwischenschienen aufweisen und die Zwischenschienen längliche Körper oberhalb der Rostanordnung sind und zumindest ein Teil der Zwischenschienen zwischen den Borstenschienen angeordnet ist, sodass zwischen zumindest einem Teil der Borstenschienen und den Zwischenschienen ein Spalt (115) vorhanden ist, und die Borstenschienen mittels der flexiblen Anordnungen an der Rostanordnung befestigt sind, und die flexible Anordnung in ihren Eigenschaften elastischer als die Schiene ist, die mittels der flexiblen Anordnung an der Rostanordnung befestigt ist, und die Oberseite der Zwischenschienen zwischen den Oberseiten der Borstenschienen und den durch die äußeren Enden der Borsten gebildeten Ebenen liegt.

2. Reinigungseinheit (101a, 101b; 601) nach Anspruch 1, **dadurch gekennzeichnet, dass** die Zwischenschienen (103; 403; 603) mittels flexibler Anordnungen (104; 604) an der Rostanordnung (114; 214; 614) befestigt sind.

3. Reinigungseinheit (101a, 101b; 601) nach Anspruch 2, **dadurch gekennzeichnet, dass** die Borstenschienen (102; 402; 602) eine Unterseite der Borstenschiene aufweisen und die Zwischenschienen (103; 403; 603) eine Unterseite der Zwischenschienen aufweisen, und die flexiblen Anordnungen (104; 604) unterhalb der Borstenschienen die Unterseiten der Borstenschienen bedecken und die flexiblen Anordnungen unterhalb der Zwischenschienen die Unterseiten der Zwischenschienen bedecken.

4. Reinigungseinheit (101a, 101b; 601) nach einem der Ansprüche 2 bis 3, **dadurch gekennzeichnet, dass** die flexiblen Anordnungen (104; 604) derartige elastische Eigenschaften aufweisen, dass, wenn das Fahrzeug über die Reinigungseinheit fährt, sich die Borstenschienen (102; 402; 602) und die Zwischenschienen (103; 403; 603) neigen, wenn der Fahrzeugreifen die Schiene überquert.

5. Reinigungseinheit (101a, 101b; 601) nach einem der Ansprüche 2 bis 4, **dadurch gekennzeichnet, dass** die elastischen Eigenschaften der den Borstenschienen (102; 402; 602) zugeordneten flexiblen Anordnungen und der den Zwischenschienen (103; 403; 603) zugeordneten flexiblen Anordnungen unterschiedlich sind.

6. Reinigungseinheit (101a, 101b; 601) nach Anspruch 5, **dadurch gekennzeichnet, dass** die den Borstenschienen (102; 402; 602) zugeordneten flexiblen Anordnungen (104; 604) elastischer als die den Zwischenschienen (103; 403; 603) zugeordneten flexiblen Anordnungen sind.

7. Reinigungsanordnung (100; 200; 400; 500; 600) für Fahrzeugreifen, wobei die Reinigungsanordnung zumindest ein Reinigungsmodul (109; 509a, 509b, 509c, 509d; 609) umfasst, wobei das Reinigungsmodul einen Rahmen (110; 210; 410), der Wände und einen Boden sowie ein erstes Ende (111) des Rahmens und ein zweites Ende (112) des Rahmens aufweist, und einen Sammelraum (113) für durch die Reinigungsanordnung gesammelte Verunreinigungen und eine oder mehrere Reinigungseinheiten (101a, 101b; 601) oberhalb des Sammelraums umfasst, und die Reinigungseinheit eine Rostanordnung (114; 214; 614) und eine Vielzahl von Borstenschienen (102; 402; 602) mit Borstenschienenoberseiten (105) aufweist, wobei die Borstenschienen Borsten (107) auf der Oberseite der Borstenschiene aufweisen, **dadurch gekennzeichnet, dass** die eine oder die mehreren Reinigungseinheiten Reinigungseinheiten nach Anspruch 1 sind, bei denen die Borstenschienen längliche Körper oberhalb der Rostanordnung quer zu der Fahrtrichtung des Fahrzeugs über die Reinigungseinheit sind und die Reinigungseinheit ferner Zwischenschienen (103; 403; 603) und flexible Anordnungen (104; 604) umfasst, und die Zwischenschienen eine Oberseite (106) der Zwischenschiene aufweisen und die Zwischenschienen längliche Körper oberhalb der Rostanordnung sind und zumindest ein Teil der Zwischenschienen zwischen den Borstenschienen angeordnet ist, sodass zwischen zumindest einem Teil der Borstenschienen und den Zwischenschienen ein Spalt (115) vorhanden ist, und die Borstenschienen mittels der flexiblen Anordnungen an der Rostanordnung befestigt sind, und die flexible Anordnung elastischere Eigenschaften als die Schiene aufweist, die mittels der flexiblen Anordnung an der Rostanordnung befestigt ist, und die Oberseite der Zwischenschienen zwischen den Oberseiten der Borstenschienen und den durch das äußere Ende der Borsten gebildeten Ebenen liegt, und das Reinigungsmodul derart konfiguriert ist, dass die Fahrtrichtung des Fahrzeugs über die Reinigungsanordnung parallel zu der Richtung zwischen den Enden des Rahmens verläuft.

8. Reinigungsanordnung (100; 200; 400; 500; 600) nach Anspruch 7, **dadurch gekennzeichnet, dass** der Sammelraum (113) eine erste Seitenkammer (116; 316) und eine zweite Seitenkammer (117; 317) aufweist, wobei die Seitenkammern an gegenüberliegenden Wänden des Rahmens (110; 210; 410) angeordnet sind und zumindest einen Teil der Wand bedecken.

9. Reinigungsanordnung (100; 200; 400; 500; 600) nach Anspruch 8, **dadurch gekennzeichnet, dass** die erste Seitenkammer (116; 316) und die zweite Seitenkammer (117; 317) die Rostanordnung (114; 214; 614) der Reinigungseinheit abstützen.

10. Reinigungsanordnung (100; 200; 400; 500; 600) nach einem der Ansprüche 8 bis 9, **dadurch gekennzeichnet, dass** der Rahmen (110; 210; 410) einen Blasanschluss (119) und einen Sauganschluss (120; 420) aufweist, wobei die Anschlüsse derart mit einem Sammelraum (113) verbunden sind, dass der Blasanschluss mit der ersten Seitenkammer (116; 316) verbunden ist und der Sauganschluss mit der zweiten Seitenkammer (117; 317) verbunden ist, und die erste Seitenkammer und die zweite Seitenkammer Öffnungen (118; 318) zu dem Sammelraum aufweisen.

11. Reinigungsanordnung (100; 200; 400; 500; 600) nach Anspruch 10, **dadurch gekennzeichnet, dass** die Öffnungen (118; 318) der Seitenkammern auf Bodenniveau des Rahmens (110; 210; 410) liegen, d. h. der Boden einen Teil der Seiten der Öffnung bildet.

12. Reinigungsanordnung (100; 200; 400; 500; 600) nach einem der Ansprüche 7 bis 11, **dadurch gekennzeichnet, dass** das Reinigungsmodul (109; 509a, 509b, 509c, 509d; 609) einen Wasseranschluss und eine Anordnung zum Fördern (425) von Wasser über das Reinigungsmodul auf die Oberfläche des Fahrzeugreifens (424) aufweist.

13. Reinigungsanordnung (100; 200; 400; 500; 600) nach Anspruch 12, **dadurch gekennzeichnet, dass** das Reinigungsmodul (109; 509a, 509b, 509c, 509d; 609) eine Sensoranordnung zum Erfassen des Fahrzeugs und zum Einleiten der Förderung von Wasser auf die Oberfläche des Fahrzeugreifens aufweist.

14. Reinigungsanordnung (100; 200; 400; 500; 600) nach einem der Ansprüche 7 bis 13, **dadurch gekennzeichnet, dass** die Reinigungsanordnung zwei oder mehr Reinigungsmodule (109; 509a, 509b, 509c, 509d; 609) umfasst und die Reinigungsmodule dazu konfiguriert sind, nebeneinander oder in einer Reihe oder in beiderlei Weise eingesetzt zu werden, um Reinigungsanordnungen unterschiedlicher Größen zu bilden.

15. Reinigungsanordnung (100; 200; 400; 500; 600) nach einem der Ansprüche 7 bis 14, **dadurch gekennzeichnet, dass** der Rahmen (110; 210; 410) des Reinigungsmoduls (109; 509a, 509b, 509c, 509d; 609) oder der Reinigungsmodule zumindest teilweise oberhalb der Oberfläche des Bodens oder dergleichen liegt und an den Enden der Reinigungsanordnung Rampenanordnungen (527, 528) vorhanden sind.

## Revendications

1. Unité de nettoyage (101a, 101b ; 601) destinée à nettoyer des pneus de véhicule (424), l'unité de nettoyage comprenant un agencement de grille (114 ; 214 ; 614) et une pluralité de rails à poils (102 ; 402 ; 602), les rails à poils étant des corps allongés, et les rails à poils présentant une surface supérieure de rail à poils (105), les rails à poils présentant des poils (107) sur la surface supérieure de rail à poils, **caractérisée en ce que** les rails à poils sont situés au-dessus de l'agencement de grille transversalement à l'unité de nettoyage de véhicule et l'unité de nettoyage comprend en outre des rails intermédiaires (103 ; 403 ; 604) et des agencements flexibles (104 ; 604), et les rails intermédiaires présentent une surface supérieure (106) des rails intermédiaires et les rails intermédiaires sont des corps allongés situés au-dessus de l'agencement de grille et au moins une partie des rails intermédiaires est située entre les rails à poils de sorte qu'il existe un espace (115) entre au moins une partie des rails à poils et les rails intermédiaires, et les rails à poils sont fixés à l'agencement de grille par les agencements flexibles, et l'agencement flexible présente des propriétés plus élastiques que le rail qu'il fixe à l'agencement de grille, et la surface supérieure des rails intermédiaires se situe entre les surfaces supérieures des rails à poils et les plans formés par les extrémités extérieures des poils.

2. Unité de nettoyage (101a, 101b ; 601) selon la revendication 1, **caractérisée en ce que** les rails intermédiaires (103 ; 403 ; 603) sont fixés à l'agencement de grille (114 ; 214 ; 614) au moyen d'agencements flexibles (104 ; 604).

3. Unité de nettoyage (101a, 101b ; 601) selon la revendication 2, **caractérisée en ce que** les rails à poils (102 ; 402 ; 602) présentent une surface inférieure du rail à poils et les rails intermédiaires (103 ; 403 ; 603) présentent une surface inférieure des rails intermédiaires, et les agencements flexibles (104 ; 604) situés sous les rails à poils recouvrent les surfaces inférieures des rails à poils et les agencements flexibles situés sous les rails intermédiaires recouvrent les surfaces inférieures des rails intermédiaires.

4. Unité de nettoyage (101a, 101b ; 601) selon l'une des revendications 2 à 3, **caractérisée en ce que** les agencements flexibles (104 ; 604) présentent des propriétés élastiques telles que, lorsque le véhicule se déplace à travers l'unité de nettoyage, les rails à poils (102 ; 402 ; 602) et les rails intermédiaires (103 ; 403 ; 603) s'inclinent lorsque le pneu du véhicule franchit le rail.

5. Unité de nettoyage (101a, 101b ; 601) selon l'une des revendications 2 à 4, **caractérisée en ce que** les propriétés élastiques des agencements flexibles associés aux rails à poils (102 ; 402 ; 602) et des agencements flexibles associés aux rails intermédiaires (103 ; 403 ; 603) sont différentes.

6. Unité de nettoyage (101a, 101b ; 601) selon la revendication 5, **caractérisée en ce que** les agencements flexibles (104 ; 604) associés aux rails à poils (102 ; 402 ; 602) sont plus élastiques que les agencements flexibles associés aux rails intermédiaires (103 ; 403 ; 603).

7. Agencement de nettoyage (100 ; 200 ; 400 ; 500 ; 600) pour pneus de véhicule, l'agencement de nettoyage comprenant au moins un module de nettoyage (109 ; 509a, 509b, 509c, 509d ; 609), le module de nettoyage comprenant un cadre (110 ; 210 ; 410) présentant des parois et un plancher ainsi qu'une première extrémité (111) du cadre et une seconde extrémité (112) du cadre, et un espace de collecte (113) destiné aux contaminants collectés par l'agencement de nettoyage, et une ou plusieurs unités de nettoyage (101a, 101b ; 601) au-dessus de l'espace de collecte, et l'unité de nettoyage présente un agencement de grille (114 ; 214 ; 614) et une pluralité de rails à poils (102 ; 402 ; 602) présentant des surfaces supérieures de rail à poils (105), les rails à poils présentant des poils (107) sur la surface supérieure du rail à poils, **caractérisé en ce que** ladite ou lesdites unités de nettoyage sont des unités de nettoyage selon la revendication 1, dans lesquelles les rails à poils sont des corps allongés situés au-dessus de l'agencement de grille transversalement à la direction de déplacement du véhicule sur l'unité de nettoyage, et l'unité de nettoyage comprend en outre des rails intermédiaires (103 ; 403 ; 603) et des agencements flexibles (104 ; 604), et les rails intermédiaires présentent une surface supérieure (106) du rail intermédiaire et les rails intermédiaires sont des corps allongés situés au-dessus de l'agencement de grille et au moins une partie des rails intermédiaires est située entre les rails à poils de sorte qu'il existe un espace (115) entre au moins une partie des rails à poils et les rails intermédiaires, et les rails à poils sont fixés à l'agencement de grille par les agencements flexibles, et l'agencement flexible présente des propriétés plus élastiques que le rail qu'il fixe à l'agencement de grille et la surface supérieure des rails intermédiaires se situe entre les surfaces supérieures des rails à poils et les plans formés par l'extrémité extérieure des poils, et le module de nettoyage est configuré de sorte que la direction de déplacement du véhicule sur l'agencement de nettoyage soit parallèle à la direction entre les extrémités du cadre.

8. Agencement de nettoyage (100 ; 200 ; 400 ; 500 ; 600) selon la revendication 7, **caractérisé en ce que** l'espace de collecte (113) présente une première chambre latérale (116 ; 316) et une seconde chambre latérale (117 ; 317), lesdites chambres latérales étant situées sur des parois opposées du cadre (110 ; 210 ; 410) et recouvrant au moins une partie de la paroi.

9. Agencement de nettoyage (100 ; 200 ; 400 ; 500 ; 600) selon la revendication 8, **caractérisé en ce que** la première chambre latérale (116 ; 316) et la seconde chambre latérale (117 ; 317) supportent l'agencement de grille (114 ; 214 ; 614) de l'unité de nettoyage.

10. Agencement de nettoyage (100 ; 200 ; 400 ; 500 ; 600) selon l'une des revendications 8 à 9, **caractérisé en ce que** le cadre (110 ; 210 ; 410) présente un raccord de soufflage (119) et un raccord d'aspiration (120 ; 420), lesquels raccords sont reliés à un espace de collecte (113) de telle sorte que le raccord de soufflage se raccorde à la première chambre latérale (116 ; 316) et le raccord d'aspiration se raccorde à la seconde chambre latérale (117 ; 317), et la première chambre latérale et la seconde chambre latérale présentent des ouvertures (118 ; 318) vers l'espace de collecte.

11. Agencement de nettoyage (100 ; 200 ; 400 ; 500 ; 600) selon la revendication 10, **caractérisé en ce que** les ouvertures (118 ; 318) des chambres latérales se trouvent au niveau du plancher du cadre (110 ; 210 ; 410), c'est-à-dire que le plancher forme une partie des côtés de l'ouverture.

12. Agencement de nettoyage (100 ; 200 ; 400 ; 500 ; 600) selon l'une des revendications 7 à 11, **caractérisé en ce que** le module de nettoyage (109 ; 509a, 509b, 509c, 509d ; 609) présente un raccord d'eau et un agencement destiné à acheminer (425) de l'eau à travers le module de nettoyage sur la surface du pneu de véhicule (424).

13. Agencement de nettoyage (100 ; 200 ; 400 ; 500 ; 600) selon la revendication 12, **caractérisé en ce que** le module de nettoyage (109 ; 509a, 509b, 509c, 509d ; 609) présente un agencement de capteur destiné à détecter le véhicule et à déclencher l'acheminement d'eau vers la surface du pneu de véhicule.

14. Agencement de nettoyage (100 ; 200 ; 400 ; 500 ; 600) selon l'une des revendications 7 à 13, **caractérisé en ce que** l'agencement de nettoyage comprend deux modules de nettoyage (109 ; 509a, 509b, 509c, 509d ; 609) ou plus, et les modules de nettoyage sont configurés pour être insérés côte à côte ou en ligne, ou les deux, afin de former des agencements de nettoyage de tailles différentes.

15. Agencement de nettoyage (100 ; 200 ; 400 ; 500 ; 600) selon l'une des revendications 7 à 14, **caractérisé en ce que** le cadre (110 ; 210 ; 410) du module de nettoyage (109 ; 509a, 509b, 509c, 509d ; 609) ou des modules de nettoyage se trouve au moins partiellement au-dessus de la surface du plancher ou similaire, et des agencements de rampe (527, 528) sont disposés aux extrémités de l'agencement de nettoyage.
